# EUROPEAN PATENT APPLICATION

(11) **EP 1 023 982 A1**
(43) Date of publication of application: **02.08.2000**
(21) Application number: 99830042.0
(22) Date of filing: 29.01.1999
(51) Int. Cl.: B29C 45/16, F16K 5/04

(54) **Method for producing a valve control element and valve control element thus produced**

(71) Applicant: Novasfer S.r.l., 25080 Carzago di Calvagese della Riviera (Prov. of Brescia) (IT)
(72) Inventor: Rumi, Luigi, 25080 Nuvolento (Brescia) (IT)
(74) Representative: Modiano, Guido, Dr.-Ing.

(57) **Abstract**

A method for producing a valve control element (4) complete with gaskets (21,22,28) which provides for the hot molding of a first thermoplastic material in a suitable mold in order to obtain a valve control element (4) provided with at least one seat (19,20) or recess (26) on its surface, and the extraction of the valve control element (4) from the mold complete with gaskets (21,22,28). The invention also relates to a valve control element (4) obtained with the method.

## Description

The present invention relates to a method for producing a valve control element complete with gaskets, particularly for faucets and hydraulic fittings.

It is known that a fluid control valve is formed by a valve body and by a control element which is accommodated in the valve body and can be actuated from outside by means of a wing nut, knob, lever or similar actuation means. The control element has one or more seats which accommodate respective sealing gaskets which must be fitted during the assembly of the valve. Seating the gaskets in position is a highly troublesome operation which entails long assembly times. Moreover, sometimes the gaskets can be fitted incorrectly, causing them to wear quickly until tightness is no longer ensured, with a consequent degradation of volumetric efficiency.

The aim of the present invention is to provide a method for producing a valve control element complete with gaskets which is capable of eliminating or significantly reducing the above-mentioned drawbacks.

Within the scope of this aim, an object of the present invention is to provide a valve control element which can be rapidly assembled in a respective valve body without the risk of producing rejects.

According to a first aspect of the present invention, this aim, this object and others which will become apparent hereinafter are achieved by a method for producing a valve control element comprising the steps of:
-- hot injection-molding a first thermoplastic material in a suitable mold in order to obtain a valve control element provided with at least one seat or recess on its surface, and characterized in that it comprises
-- a molding in place of a second thermoplastic material for gaskets directly on, and in, said valve control element at said seat or seats provided in order to form one or more gaskets, with consequent surface melting of said second thermoplastic material in the regions of contact with said seat or seats so as to anchor it permanently in said seat or seats,
-- the extraction of said valve control element from the mold complete with gaskets.

According to another aspect of the present invention, a valve control element is provided which can be rotatably accommodated in a valve body and is made of a first thermoplastic material, comprising at least one transverse through hole and a tab which is rigidly coupled thereto and is configured as a fixing means which can be rigidly coupled to actuation means, characterized in that it has at least one gasket which is made of a second thermoplastic material and is obtained by molding in place monolithically therewith.

Further characteristics and advantages of the present invention will become apparent from the following detailed description of some currently preferred embodiments thereof, given merely by way of non-limitative example with reference to the accompanying drawings, wherein:
Figure 1 is a slightly elevated perspective view, with parts shown in cross-section, of a valve provided with a valve control element according to the invention;
Figure 2 is a reduced-scale lateral elevation view of the valve of Figure 1, complete with an actuation handle;
Figure 3 is a front elevation view of a valve control element without gaskets;
Figure 4 is a sectional view, taken along the plane IV-IV of Figure 3;
Figure 5 is a sectional view, taken along the plane V-V of Figure 3;
Figure 6 is a lateral elevation view of a valve control element complete with gaskets provided monolithically therewith:
Figure 7 is an enlarged-scale view of a detail of the control element of Figure 6; and
Figure 8 is a reduced-scale lateral elevation view of part of a control element according to another embodiment.

In the accompanying drawings, identical or similar parts or components have been designated by the same reference numerals.

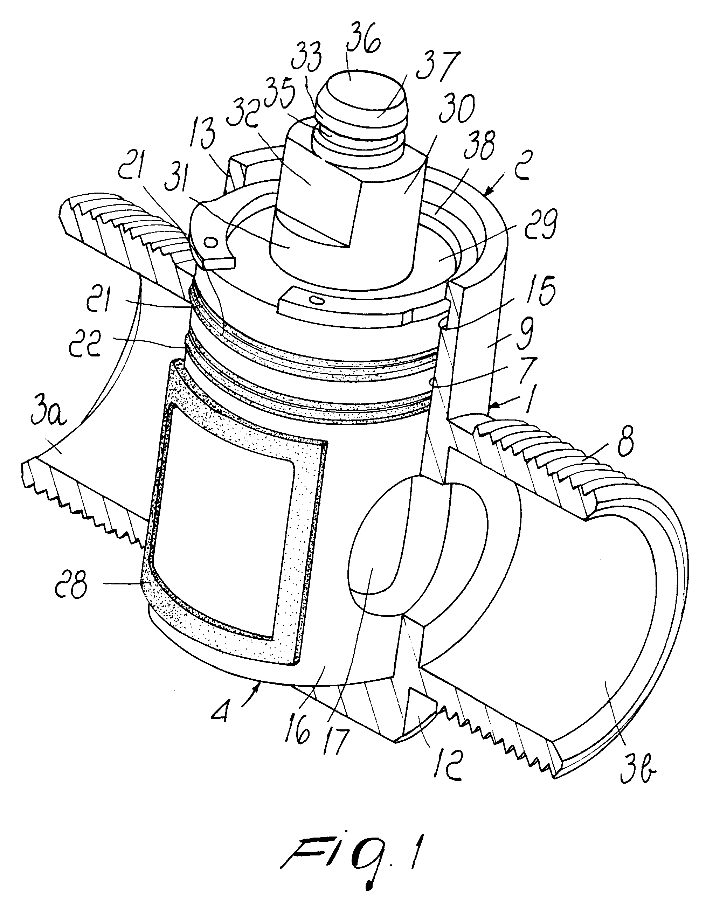

Initially with reference to Figures 1 to 7, the reference numeral 1 generally designates a valve according to the invention, which comprises: a valve body 2, provided with axially aligned connectors 3a and 3b which are externally threaded for hydraulic connection to a system; a valve control element 4, which can be accommodated in the valve body 2; and an actuation means 5 and a stroke limiter 6 for the control element 4.

The central part of the valve body 2 is constituted by a substantially cylindrical cup-shaped element 9, which is axially aligned with the axis of the connectors 3a and 3b and internally delimits a seat 7 for accommodating the valve control element 4. The cup-shaped element has a closed end wall 12, while its other end 13 is open and internally affected by a circumferential groove 15.

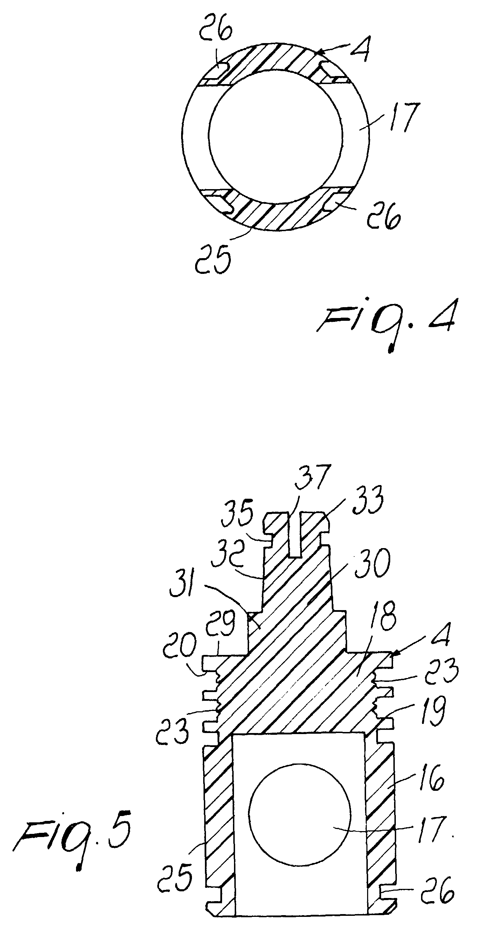

As shown more clearly in Figures 3 to 6, the control element 4 is constituted by a cylindrical monobloc element 16 which is crossed by a transverse hole 17 whose axis is substantially perpendicular to the axis of the cylinder 16. Above the hole 17, the cylindrical block 16 is affected by two circumferential grooves 19 and 20 which are designed to accommodate respective sealing gaskets 21 and 22.

With reference to Figure 7, it can be noted that the base surface of each groove has uneven regions 23 which are meant to increase the surface of contact with the respective gaskets 21 and 22, in order to provide a more extensive and more durable bonding between the valve control element and the gasket.

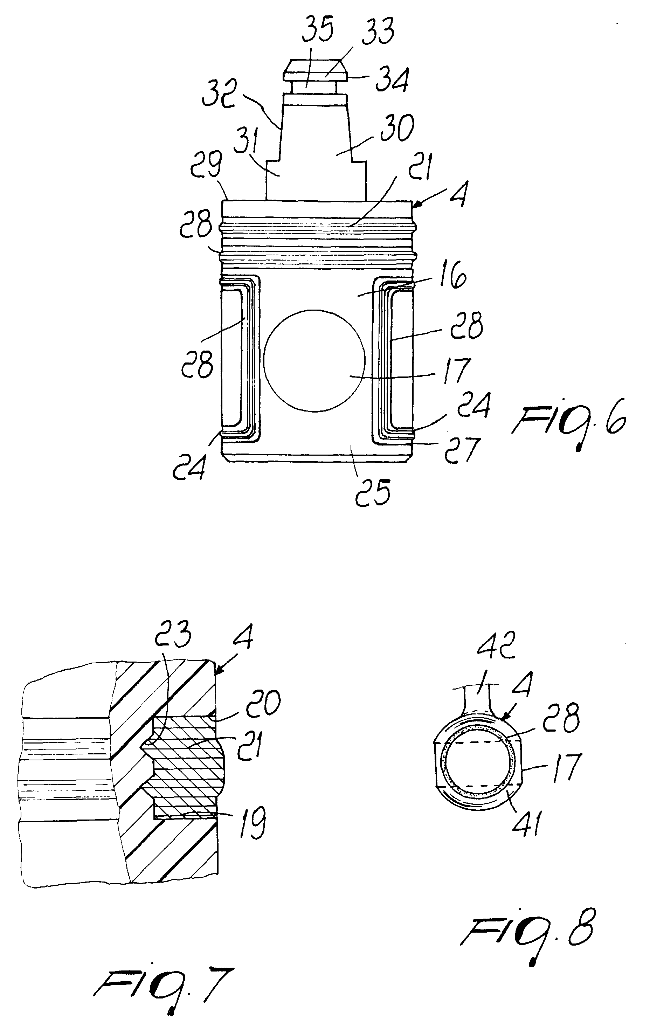

The lateral surface 25 of the cylindrical block 16 around the hole 17 is affected by two mutually opposite recesses 26, each of which delimits a polygonal curve 27 closed in a loop and is meant to accommodate a respective sealing gasket 28. Said closed polygonal curve 27 can have, for example, a rectangular configuration with two sides parallel to the axis of the control element 4 and during use it is meant to surround, in the closure position, a respective opening 17 for connecting the cup 9 to a respective connector 3a and 3b to prevent fluid leaks. The sealing gasket 28 can protrude uniformly from the control element 4 (Figure 1) or have a raised portion 24 (Figure 6).

A central pivot or tab 30 rises monolithically from the upper end surface 29 of the cylinder 16 and is for example affected, at its distal end with respect to the cylinder 16, by two diametrically opposite flat regions 32 which are slightly inclined toward each other away from the surface 29 and end with a head 33 for fixing to an actuation means. The head 33 has a cylindrical configuration, and an annular groove 35 and an axial end slot 37 are formed therein (Figure 5).

The control element 4 can be accommodated with its cylindrical portion 16 in the seat 7, leaving the central pivot 30 to protrude from it. Along the edge of the upper surface 29 of the control element 4 there is provided an open snap ring 38 which can engage in the annular groove 15 to prevent translatory motions of the valve control element 4 within the chamber 11.

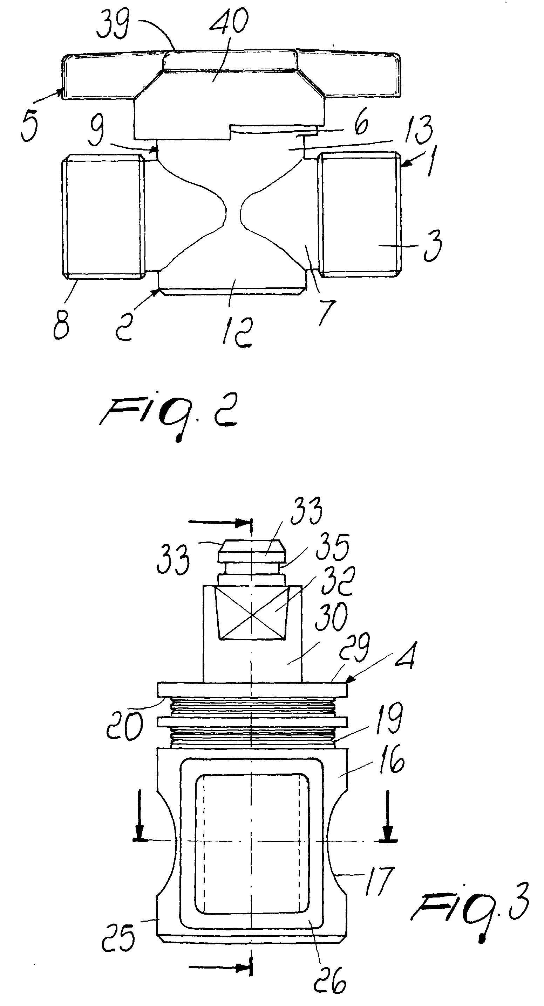

A cover 39 (Figure 2) can be rigidly coupled to the pivot 30 and is constituted by a central bell-shaped element whose internal cavity mates, during use, both with the flat regions 32 and with the outer surface of the open end 13 of the valve body 2, and which is externally provided with two mutually opposite wings 5 which act as an actuation means to turn the cover 39 and therefore the control element 4 fixed thereto. In this manner it is possible to adjust the valve 1 continuously from the fully open position, in which the transverse hole 17 is coaxial to the connectors 3a and 3b, to the closed position, in which the transverse hole 17 and the connectors 3a and 3b have mutually perpendicular axes.

More particularly, the base of the bell-shaped element 40 can be advantageously affected by two mutually opposite steps 6 which are meant to abut against respective protrusions provided on the outer surface of the cup-shaped element 9 in order to constitute stroke limiters for the rotation of the cover 39.

Figure 8 shows another embodiment according to which the control element 4 has a spherical main portion 41 which is rigidly coupled to a rod 42 which, during use, protrudes from the cup-shaped element 9 for fixing to an actuation means. According to this embodiment, the sealing gasket 28 has a circular configuration.

The valve control element 4 is made of thermoplastic material and is preferably produced by hot injection-molding in a suitable mold. Molding in place of another thermoplastic material, preferably rubber, is then performed directly on the control element 4 at the seats 19 and 20 or at the recesses 26 which are meant to accommodate the gaskets 21, 22 and 28 respectively, causing a surface melting of the thermoplastic material of the valve control element 4, which is still hot, in the regions of contact with the rubber, so that the two thermoplastic materials bond so as to obtain a monolithic control element 4. Then, once cooling has occurred, the control element 4 complete with rubber gaskets 21, 22 and 28 is removed from the mold.

As an alternative to the melting of the thermoplastic material of which the valve control element 4 is made, it is possible to provide for a control element body 4 with seats 19, 20 and 26 for gaskets which have rough surfaces so that once the molding in place of the rubber gaskets 21, 22 and 28 at the seats 19, 20 and 26 has ended, the mutually contacting surfaces of the two materials mate in order to become rigidly coupled to each other.

The thermoplastic material that can be used to produce the control element 4 can be Noryl, manufactured by the Fibre-Metal Products Company and registered by the General Electric Company. With respect to other commercially available thermoplastic materials, such as for example nylon, Noryl offers higher resistance to relatively high temperatures, in addition to higher mechanical resistance to flexing and traction stresses. It is further capable of maintaining perfect dimensional stability throughout its period of use. A Noryl control element 4 has very smooth and hard surfaces, so as to minimize any adhesion of impurities present in the fluid that flows through the valve 1.

The rubber used to provide the gaskets 21, 22 and 28 can be Santoprene, manufactured by Advanced Elastomer Systems and marketed in Italy by Guberti S.p.A., Treviso, Italy.

The control element body 4 according to the invention allows to considerably reduce both the production and the assembly time of the valve 1, since the gaskets 21, 22 and 28 are monolithic with the control element 4, thus avoiding incorrect assemblies which sometimes compromise the correct operation of a system.

The materials and the dimensions may be various according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for producing a valve control element complete with gaskets which provides for:
-- the hot molding of a first thermoplastic material in a suitable mold in order to obtain a valve control element provided with at least one seat or recess on its surface, characterized in that it comprises the molding in place of a second thermoplastic material for gaskets directly on, and in, said valve control element at said seat or seats provided in order to form one or more gaskets, with consequent surface melting of said second thermoplastic material in the regions of contact with said second material so that said second material is anchored permanently in said seat or seats, and
-- the extraction of said valve control element from the mold complete with gaskets.

2. The method according to claim 1, characterized in that said seat or seats for gaskets has or have rough surfaces in order to ensure better mating with said second material.

3. The method according to claim 1 or 2, characterized in that said first material for the valve control element is Noryl.

4. The method according to claim 1 or 2, characterized in that said second material is Santoprene.

5. The method according to any one of the preceding claims, characterized in that said molding is injection-molding.

6. A valve control element which can be accommodated in a valve body and is made of a first thermoplastic material, said valve control element comprising at least one transverse through hole and a tab which is rigidly coupled thereto and is configured like a fixing means which can be rigidly coupled to actuation means and is characterized in that it has at least one gasket made of a second thermoplastic material obtained by molding in place monolithically therewith.

7. The control element according to claim 6, characterized in that said gasket or gaskets have a portion which protrudes with respect to the external surface of said control element body.

8. The control element according to claim 6 or 7, characterized in that said gasket or gaskets protrudes or protrude along the outer surface of said control element body.

9. The control element according to any one of the preceding claims 6 to 8, characterized in that it comprises a larger portion which has a cylindrical configuration and is affected by said through hole, said tab protruding axially from one end of said cylindrical portion.

10. The control element according to claim 9, characterized in that said cylindrical portion has at least one cylindrical wraparound gasket and two rectangular annular gaskets which are arranged mutually opposite on the opposite side with respect to said through hole.

11. The control element according to any one of the preceding claims 6 to 8, characterized in that it comprises a larger portion which has a substantially spherical configuration and is affected by said through hole, said tab protruding radially from said spherical portion.

12. The control element according to claim 11, characterized in that said spherical portion has at least one gasket which is coaxial to said tab and two circular gaskets which are arranged mutually opposite on opposite sides with respect to said through hole.
